(19)

Europäisches Patentamt

European Patent Office

Office européen des brevets

(11) **EP 4 738 683 A1**

(12) **EUROPEAN PATENT APPLICATION**

(43) Date of publication:
**06.05.2026 Bulletin 2026/19**

(21) Application number: **24209603.0**

(22) Date of filing: **29.10.2024**

(51) International Patent Classification (IPC):
*H02P 3/18* (2006.01)    *F25B 49/02* (2006.01)
*H02P 29/024* (2016.01)    *H02P 29/032* (2016.01)
*H02P 29/60* (2016.01)    *H02P 29/64* (2016.01)

(52) Cooperative Patent Classification (CPC):
**H02P 3/18; F25B 49/025; H02P 29/024;**
**H02P 29/032; H02P 29/60; H02P 29/64;**
F25B 2600/021; F25B 2600/0253; F25B 2700/151

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Thermo King LLC**
**Minneapolis, MN 55420 (US)**

(72) Inventor: **SMYTH, Ciarán**
**Galway, H91 C9HW (IE)**

(74) Representative: **Haseltine Lake Kempner LLP**
**One Portwall Square**
**Portwall Lane**
**Bristol BS1 6BH (GB)**

Remarks:
Amended claims in accordance with Rule 137(2) EPC.

(54) **A REFRIGERATION SYSTEM AND A METHOD OF OPERATING A REFRIGERATION SYSTEM**

(57)    There is described a refrigeration system 10, the refrigeration system 10 comprising an induction motor 18 having a rotor 23, wherein the refrigeration system 10 is configured to: supply 102 an alternating current to the induction motor 18 to induce rotation of the rotor 23, wherein rotation of the rotor 23 powers one or more loads 20, 21 of the refrigeration system 10; identify 104 a predetermined threshold value $R_{t1}$ of a parameter R of the induction motor 18 and a predetermined relationship associated with the induction motor 18 between the parameter R and a derating amount $P_1$, the parameter R being an angular velocity or a slip of the rotor 23 of the induction motor 18; determine 106 the parameter R of the rotor 23 during rotation of the rotor 23; determine 108 whether the determined parameter R meets a first condition, the first condition being the angular velocity R being less than the predetermined threshold value $R_{t1}$ or the slip being greater than the predetermined threshold value $R_{t1}$; upon determining that the first condition has been met, determine 110 a derating amount $P_1$ based on the determined parameter R and the predetermined relationship; and derate 112 the one or more loads 20, 21 by the derating amount $P_1$. There is also described a method 100, 200, 300, 400, 500 of operating a refrigeration system.

FIG. 3

EP 4 738 683 A1

## Description

### FIELD OF THE INVENTION

The invention relates to a refrigeration system and a method of operating a refrigeration system.

### BACKGROUND OF THE INVENTION

Induction motors comprise a stator having a plurality of stator windings and a rotor having a plurality of rotor windings. During operation, power is provided to the stator windings, which generates a rotating magnetic field. The rotating magnetic field induces a current in the rotor windings that interacts with the rotating magnetic field generated by the stator windings. This interaction results in a force being imparted on the rotor that causes it to rotate in the same direction as the rotating magnetic field. The electrical current flowing through the stator windings causes the temperature of the stator windings to increase and become damaged if they get too hot. Accordingly, induction motors commonly incorporate control systems comprising temperature sensors embedded in the stator windings that sense the temperature of the stator windings during operation and derate the load on the induction motor if the stator windings become too hot. However, the sensors may be unreliable, expensive and not accurately reflect the true temperature of the stator windings. It is therefore desirable to provide an improved refrigeration system and method of operating a refrigeration system that addresses these issues.

### STATEMENTS OF INVENTION

According to an aspect there is described a refrigeration system, the refrigeration system comprising an induction motor having a rotor. The refrigeration system is configured to: supply an alternating current to the induction motor to induce rotation of the rotor, wherein rotation of the rotor powers one or more loads of the refrigeration system; identify a predetermined threshold value of a parameter of the induction motor and a predetermined relationship associated with the induction motor between the parameter and a derating amount, the parameter being an angular velocity or a slip of the rotor of the induction motor; determine the parameter of the rotor during rotation of the rotor; determine whether the determined parameter meets a first condition, the first condition being the angular velocity being less than the predetermined threshold value or the slip being greater than the predetermined threshold value; upon determining that the first condition has been met, determine a derating amount based on the determined parameter and the predetermined relationship; and derate the one or more loads by the derating amount.

The refrigeration system may be configured to: determine an updated parameter of the rotor during rotation of the rotor following derating the induction motor by the derating amount, the determined updated parameter being an updated angular velocity or an updated slip of the rotor of the induction motor; determine whether the determined updated parameter meets a second condition, the second condition being the updated angular velocity being greater than the predetermined threshold value or the slip being less than the predetermined threshold value; and stop derating the induction motor by the derating amount upon determining that the second condition has been met.

The refrigeration system may be configured to: determine whether the determined updated parameter meets the second condition for a predetermined threshold period of preceding time; stop derating the induction motor by the derating amount upon determining that the second condition has continuously been met for the predetermined threshold period of preceding time; and continue derating the induction motor by the derating amount upon determining that the second condition has not been met for the predetermined threshold period of preceding time.

The refrigeration system may be configured to: identify a predetermined further threshold value, the predetermined further threshold value being a predetermined threshold value of the determined updated parameter, wherein the predetermined further threshold value is less than the predetermined threshold value if the parameter is the angular velocity of the rotor, and wherein the predetermined further threshold value is greater than the predetermined threshold value if the parameter is the slip of the rotor; and determine whether the determined updated parameter meets a third condition, the third condition being the updated angular velocity being greater than the predetermined further threshold value or the updated slip being less than the predetermined further threshold value.

The refrigeration system may be configured to: determine an updated derating amount based on the determined updated parameter and the predetermined relationship upon determining that the third condition has been met; determine whether the updated derating amount is greater than the derating amount; and derate the induction motor by the updated derating amount upon determining that the updated derating amount is greater than the derating amount.

The refrigeration system may be configured to: shut down the induction motor upon determining that the third condition has not been met.

The alternating current that the refrigeration system is configured to supply to the induction motor may have a phase. The predetermined threshold value may be predetermined as being the angular velocity or slip of the rotor of the induction motor that results in a temperature of the winding of the induction motor being a predetermined first amount lower than a predetermined rated temperature of the winding of the induction motor when the induction motor is supplied with the phase of alternating current.

The predetermined further threshold value may be predetermined as being the angular velocity or slip of the rotor of the induction motor that results in a temperature of the winding of the induction motor being a predetermined second amount lower than the predetermined rated temperature of the winding of the induction motor when the induction motor is supplied with the phase of alternating current, the second amount being less than the first amount.

The derating amount and/or the updated derating amount may tend to a predetermined maximum derating amount as the determined parameter and/or the determined updated parameter tend to the predetermined further threshold value. The predetermined maximum derating amount may be or be based on the maximum amount the load on the induction motor needs to be reduced by for the temperature of the winding to be less than the temperature of the winding that is the first amount lower than the predetermined rated temperature of the winding.

The derating amount and/or the updated derating amount may tend to zero as the determined parameter and/or the determined updated parameter tend to the predetermined threshold value.

The derating amount may be directly proportional to the difference between the determined parameter and the predetermined threshold value. The updated derating amount may be directly proportional to the difference between the determined updated parameter and the predetermined threshold value.

The induction motor may be selected from a plurality of induction motors. One or more of the predetermined threshold value, the predetermined further threshold value, the predetermined relationship associated with the induction motor between the derating amount and the determined parameter, the predetermined threshold period of preceding time, the predetermined first amount, the predetermined rated temperature, the predetermined second amount and the predetermined maximum derating amount of each of the plurality of induction motors may be stored in a memory that is accessible by the refrigeration system, wherein optionally the memory is in the form of a lookup table.

The determined parameter may be an average angular velocity or an average slip of the rotor over a predetermined period of time.

The refrigeration system may be configured to: start up the refrigeration system; determine whether the refrigeration system is operating in an electric mode of operation; carry out the steps of any preceding claim upon determining that the transportation refrigeration system is operating in the electric mode of operation; and not carry out the steps of any preceding claim upon determining that the transportation refrigeration system is not operating in the electric mode of operation.

A method of operating a refrigeration system as claimed in any preceding claim, the method comprising: supplying an alternating current to the induction motor to induce rotation of the rotor, wherein rotation of the rotor powers the one or more loads of the refrigeration system; identifying a predetermined threshold value of a parameter of the induction motor and a predetermined relationship associated with the induction motor between the parameter and a derating amount, the parameter being an angular velocity or a slip of the rotor of the induction motor; determining the parameter of the rotor during rotation of the rotor; determining whether the determined parameter meets a first condition, the first condition being the angular velocity being less than the predetermined threshold value or the slip being greater than the predetermined threshold value; upon determining that the first condition has been met, determining a derating amount based on the determined parameter and the predetermined relationship; and derating the one or more loads by the derating amount.

## LIST OF FIGURES

For a better understanding of the present invention, and to show more clearly how it may be carried into effect, reference will now be made, by way of example, to the accompanying drawings, in which:

Figure 1 is a perspective view of a vehicle comprising refrigeration system;

Figure 2 schematically shows a first example of the refrigeration system;

Figure 3 is a flowchart of a first method of operating the first example refrigeration system;

Figure 4 is a flowchart of a second method of operating the first example refrigeration system;

Figure 5 is a flowchart of a third method of operating the first example refrigeration system;

Figure 6 is a flowchart of a fourth method of operating the first example refrigeration system;

Figure 7 schematically shows a second example refrigeration system;

Figure 8 is a flowchart of a method of operating the second example refrigeration system;

Figure 9 is a graph showing the relationship between slip and torque in an induction motor; and

Figure 10 is a flowchart of a method of predetermining characteristics of the induction motor.

## DETAILED DESCRIPTION

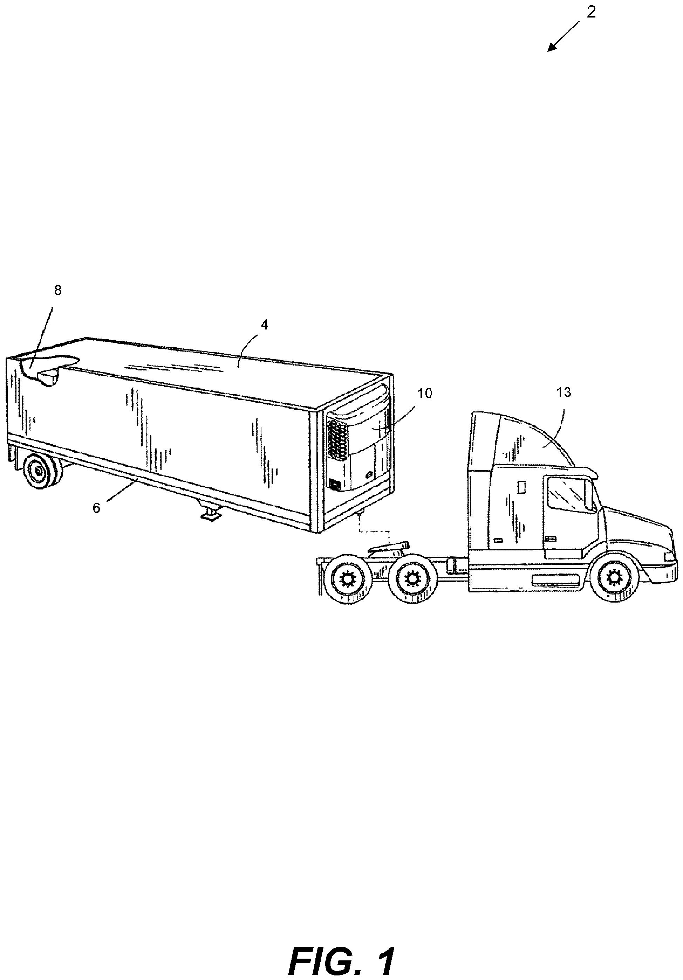

Figure 1 shows a vehicle 2 comprising a climate-controlled module 4. The climate-controlled module 4 is an over-the-road refrigerated semi-trailer having a structure 6 supporting (or forming) a single climate-controlled compartment 8 that is configured to be cooled by a refrigeration system 10 (also referred to as a transportation refrigeration unit or TRU). The structure 6 also supports the refrigeration system 10. The vehicle 2 further comprises a tractor unit 13 removably couplable to the climate-controlled module 4.

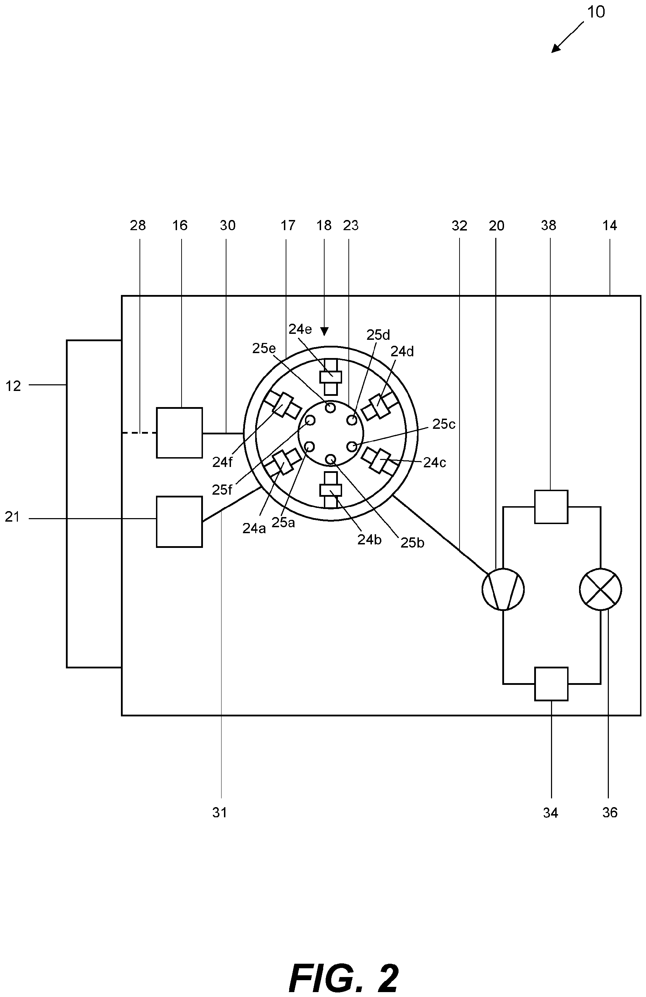

Figure 2 is a schematic view of the refrigeration system 10. The refrigeration system 10 comprises a controller 12 and a housing 14. A compressor 20, a condenser 34, an expansion device 36 and an evaporator 38 are disposed within the housing 14 and connected in flow series. An electrical power source 16, an induction motor 18 and an electrical generator 21 are also disposed within the housing 14. The induction motor 18 comprises a stator 17, a rotor 23, a plurality of stator windings 24a, 24b, 24c, 24d, 24e, 24f and a plurality of rotor windings 25a, 25b, 25c, 25d, 25e, 25f. The controller 12 is configured to operate the refrigeration system 10 in accordance with the methods 100, 200, 300, 400 described below. The controller 12 is communicatively coupled to the electrical power source 16 via a first wired or wireless connection 28, and the electrical power source 16 is connected to the induction motor 18 via a wired connection 30. The induction motor 18 is mechanically coupled to the compressor 20 via a first mechanical coupling 32, which, along with the other components of the refrigeration system 10, is shown schematically in Figure 2. The induction motor 18 is connected to the electrical generator 21 via a second mechanical coupling 31. The electrical generator 21 is in turn electrically connected to one or more electrical components of the refrigeration system 10 such as one or more fans of the refrigeration system 10 and/or one or more electrical batteries of the refrigeration system 10. In alternative embodiments both the compressor 20 and the electrical generator 21 may be connected to the induction motor 18 by a single mechanical coupling.

During operation, the refrigeration system 10 is started up by the controller 12. The controller 12 provides instructions to the electrical power source 16 to supply electrical power to the induction motor 18 via the wired connection 30. In particular, three-phase electrical power is provided to the stator windings 24a-24f. The electrical current flowing through the stator windings 24a-24f generates a rotating magnetic field and causes the temperature of the stator windings 24a-24f to increase. The rotational speed of the rotating magnetic field is known as the synchronous speed. The rotating magnetic field induces a current in the rotor windings 25a-f of the induction motor 18. The current in the rotor windings 25a-f interacts with the rotating magnetic field generated by the stator windings 24a-f, which in turn generates a force on the rotor 23 that induces the rotor 23 to rotate in the same direction as the rotating magnetic field.

Rotation of the rotor 23 causes the first mechanical coupling 32 to rotate, which in turn provides mechanical power to the compressor 20 to allow it to operate. The compressor 20, the condenser 34, the expansion device 36 and the evaporator 38 operate to provide cooling to the compartment 8 (not shown in Figure 2). In addition, rotation of the rotor 23 causes the second mechanical coupling 31 to rotate, which in turn provides mechanical power to the electrical generator 21 to allow it to generate electrical power for the additional electrical components of the refrigeration system 10 such as the fans and/or batteries. In this manner, the compressor 20 and the electrical generator 21 are loads of the induction motor 18.

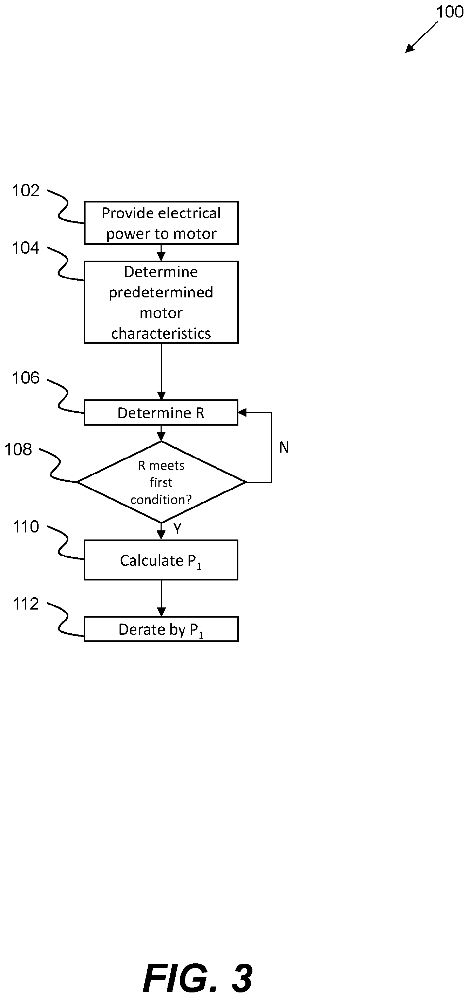

**Figure 3** shows a flowchart of a first method 100 of operating the refrigeration system 10.

In step 102 of the method 100, an alternating current is supplied to the induction motor 18 to induce rotation of the rotor 23 in the manner described above. In particular, the controller 12 provides a signal to the electrical power source 16 via the wired or wireless connection 28, which in turn provides power to the stator windings 24a-f via the wired connection 30. The alternating current supplied to the induction motor 18 may be three-phase electrical power at a 50 Hertz or 60 Hertz frequency. The method 100 then proceeds to step 104.

In step 104 of the method 100, a predetermined threshold value $R_{t1}$ of a parameter R of the induction motor 18 and a predetermined relationship associated with the induction motor 18 between the parameter R and a derating amount $P_1$ are identified.

The parameter R may be an angular velocity of the rotor 23. Accordingly, the predetermined threshold value $R_{t1}$ may be a predetermined threshold angular velocity of the rotor 23 installed in the refrigeration system 10. The predetermined threshold value $R_{t1}$ may be referred to as an upper slip limit. The predetermined relationship associated with the induction motor 18 between the parameter R and a derating amount $P_1$ may define an amount by which the load on the induction motor 18 should be derated based on a determined parameter of the rotor 23 of the induction motor 18 installed in the refrigeration system 10.

The predetermined threshold value $R_{t1}$ and the predetermined relationship may be stored in a memory of the controller 12 itself or stored in a memory that is remote from the controller 12 but accessible by the controller 12. Accordingly, identifying the predetermined threshold value $R_{t1}$ or predetermined relationship of the induction motor 18 may comprise the controller 12 identifying the predetermined threshold value $R_{t1}$ or predetermined relationship by accessing a predetermined threshold value $R_{t1}$ or a predetermined relationship stored in the memory that corresponds to the induction motor 18 installed in the refrigeration system 10. The predetermined relationship may be in the form of an equation setting out the relationship between the parameter R and a derating amount $P_1$. Alternatively, the predetermined relationship may be in the form of a map setting out specific pre-calculated

derating amounts $P_1$ for different determined parameters R for the induction motor 18 installed in the refrigeration system 10.

The induction motor 18 installed in the refrigeration system 10 may be selected from a plurality of induction motors 18, one or more of which have different characteristics from the induction motor 18 that is installed in the refrigeration system. Accordingly, the memory may store a respective predetermined threshold value $R_{t1}$ and predetermined relationship for each of the plurality of induction motors 18. The memory may be in the form of a lookup table in which the predetermined threshold values $R_{t1}$ and predetermined relationships are stored. The method 100 then proceeds to step 106.

In step 106 of the method 100, the controller 12 determines a parameter R of the rotor 23. The parameter R may be a rolling average of the speed of the rotor 23 over a predetermined previous number of sensed values of the speed of the rotor 23 (e.g. 30 sensed values of the speed of the rotor 23). It will however be appreciated any other average measurement using a different number of data points may also be used. It will also be appreciated that the parameter R may be a rolling average of the speed of the rotor 23 over a predetermined period of time (e.g. 5 seconds). Alternatively, the parameter R may be an instantaneous (i.e. non-average) value of the speed of rotation of the rotor 23. The method 100 then proceeds to step 108.

In step 108 of the method 100, the controller 12 determines whether the parameter R meets a first condition. In particular, the controller 12 compares the determined angular velocity R to the predetermined threshold value of angular velocity $R_{t1}$ and determines whether the determined angular velocity R is less than the predetermined threshold value of angular velocity $R_{t1}$. If it is determined in step 108 that the first condition has been met, the method 100 proceeds to step 110. If it is determined in step 108 that the first condition has not been met, the method 100 returns to step 106.

In step 110 of the method 100, the controller 12 determines a derating amount $P_1$ based on the parameter R and the predetermined relationship. As mentioned above, the predetermined relationship may be in the form of an equation setting out the relationship between the parameter R and a derating amount $P_1$. For example, the predetermined relationship may be in the form of the following equation in which the values of a and b are constants that are predefined for the specific induction motor 18 being operated:

$$P_1 = aR + b$$

In such embodiments, determining a derating amount based on the relationship between the parameter R and a derating amount $P_1$ may involve (i) accessing the above equation from the memory, (ii) accessing predetermined values of a and b for the induction motor 18 being operated from memory and (iii) inserting the predetermined values of a and b and the determined parameter R into the above equation to determine the derating amount $P_1$. Determining a derating amount based on the relationship between the parameter R and a derating amount $P_1$ may alternatively involve (i) accessing the above equation with predetermined values of a and b for the induction motor 18 being operated already inserted into the equation from memory and (iii) inserting the determined parameter R into the equation to determine the derating amount $P_1$.

As also mentioned above, the predetermined relationship may be in the form of a map setting out specific pre-calculated derating amounts $P_1$ for different determined parameters R for the induction motor 18 installed in the refrigeration system 10. In such embodiments, determining a derating amount based on the relationship between the parameter R and a derating amount $P_1$ may involve identifying the specific pre-calculated derating amount $P_1$ for the induction motor 18 installed in the refrigeration system 10 that maps to the determined parameter R. The method 100 then proceeds to step 112.

In step 112 of the method 100, the controller 12 derates the load or loads by the derating amount $P_1$. If the load is the compressor 20, the controller 12 derating the load may comprise the controller 12 adjusting valves of the compressor 20 (e.g. electronic throttling valves) to reduce the amount of power the compressor 20 is withdrawing from the induction motor 18 during operation by the derating amount $P_1$. If the load is the electrical generator21, the controller 12 derating the load may involve the controller 12 adjusting how much power the electrical generator 21 is withdrawing from the induction motor 18 during operation by the derating amount $P_1$, for example by reducing fan speed or reducing the charge current to the electrical batteries. If multiple loads are being derated rather than a single load, it will be appreciated that the derating amount $P_1$ is the combined amount of derating across all of the loads that the rotor 23 is powering. Derating 112 the one or more loads 20, 21 being powered by the induction motor 18 reduces the temperature of the stator windings 24a-24f to reduce the likelihood of them becoming damaged. The refrigeration systems 10 and associated method 100 allows a refrigeration system to be accurately controlled without needing to incorporate sensors. This may improve the reliability and accuracy of control, as well as reducing cost.

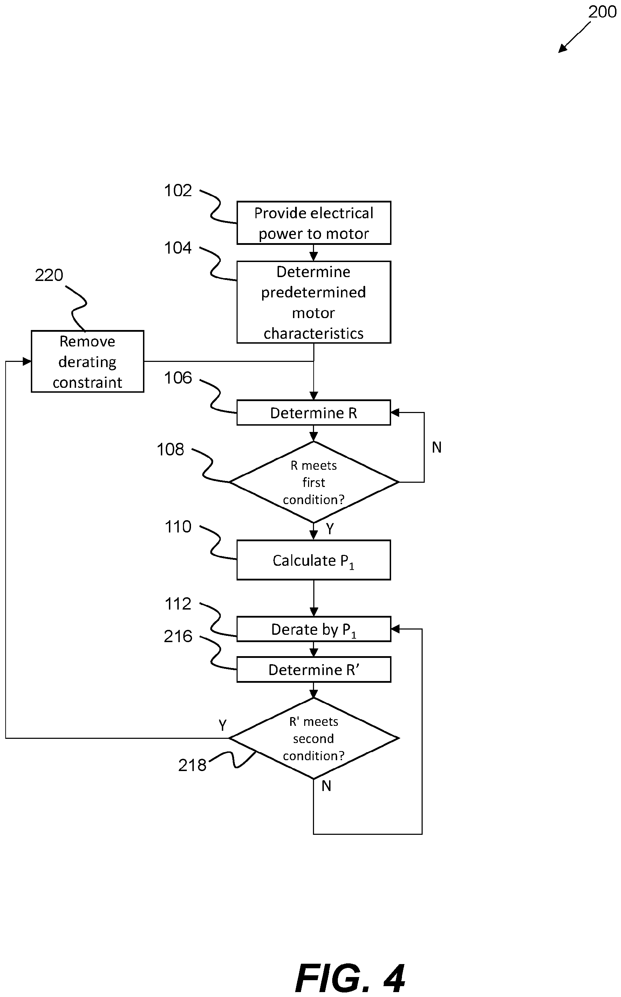

**Figure 4** shows a flowchart of a second method 200 of operating the refrigeration system 10. The second method 200 generally corresponds to the first method 100 described above, with like reference numerals indicating common or similar features. In the second method 200, following step 112, the method 200 proceeds to step 216.

In step 216 of the method 200, the controller 12 determines an updated parameter R' of the rotor 23. The updated parameter R' may be calculated in the same way as the parameter R determined in step 106, but using data received after the controller 12 has derated the one or more loads 20, 21 by the derating amount $P_1$ in step 112. The method 200 then proceeds to step 218.

In step 218 of the method 200, the controller 12 determines whether the updated parameter R' meets a second condition. In particular, the controller 12 compares the updated determined angular velocity R' to the predetermined threshold value of angular velocity $R_{t1}$ and determines whether the updated determined angular velocity R' is greater than the predetermined threshold value of angular velocity $R_{t1}$. If it is determined in step 218 that the second condition has been met, the method 200 proceeds to step 220. If it is determined in step 218 that the second condition has not been met, the method 200 returns to step 112.

In step 220 of the method 200, the controller 12 removes the derating constraint applied in step 112 such that the derating of the one or more loads 20, 21 by the derating amount $P_1$ is stopped. The method 200 then returns to step 106.

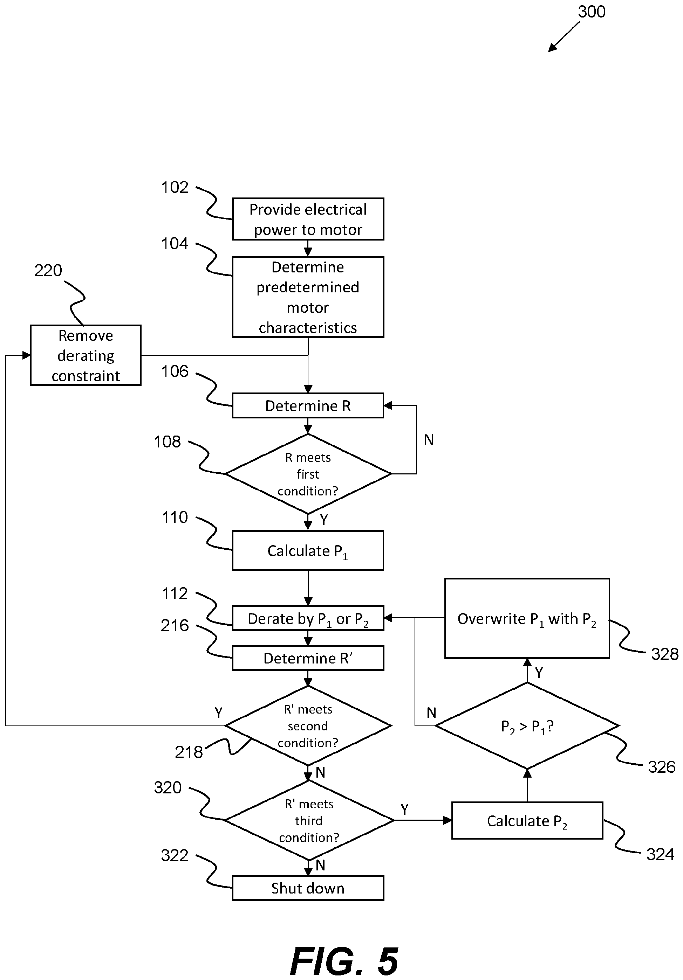

**Figure 5** shows a flowchart of a third method 300 of operating the refrigeration system 10. The third method 300 generally corresponds to the second method 200 described above, with like reference numerals indicating common or similar features.

The third method 300 differs from the second method 200 in that step 104 additionally comprises determining a further predetermined threshold value $R_{t2}$. The further predetermined threshold value $R_{t2}$ is a predetermined threshold value of the determined updated parameter R' of the induction motor 18. The further predetermined threshold value $R_{t2}$ may be a further predetermined threshold angular velocity of the rotor 23 installed in the refrigeration system 10, with the predetermined further threshold value $R_{t2}$ of angular velocity being an angular velocity that is less than the predetermined threshold value $R_{t1}$ of angular velocity. The further predetermined threshold value $R_{t2}$ may be referred to as a lower slip limit. The further predetermined threshold value $R_{t2}$ may be stored in a memory of the controller 12 itself or stored in a memory that is remote from the controller 12 but accessible by the controller 12. Accordingly, identifying the further predetermined threshold value $R_{t2}$ may comprise the controller 12 identifying the further predetermined threshold value $R_{t2}$ by accessing a further predetermined threshold value $R_{t2}$ stored in the memory that corresponds to the induction motor 18 installed in the refrigeration system 10. The memory may store a respective further predetermined threshold value $R_{t2}$ for each of the plurality of induction motors 18.

The third method 300 further differs from the second method 200 in that, if it is determined in step 218 that the second condition has not been met, the method 300 proceeds to step 320.

In step 320 of the method 300, the controller 12 determines whether the updated parameter R' meets a third condition. In particular, the controller 12 compares the updated determined angular velocity R' to the further predetermined threshold value of angular velocity $R_{t2}$ and determines whether the updated determined angular velocity R' is greater than the further predetermined threshold value of angular velocity $R_{t2}$. If it is determined in step 320 that the third condition has been met, the method 300 proceeds to step 324. If it is determined in step 320 that the third condition has not been met, the method 300 proceeds to step 322.

In step 322 of the method 300, the controller 12 shuts down the induction motor 18 of the refrigeration system 10. For example, the controller 12 may provide instructions to the electrical power source 16 to stop supplying electrical power to the induction motor 18 via the wired connection 30 such that three-phase electrical power is not provided to the stator windings 24a-24f, the rotor 23 does not rotate and mechanical power is not provided to the compressor 20. Step 322 may further involve the controller 12 reporting an overtemperature fault of the induction motor 18.

In step 324 of the method 300, the controller 12 determines an updated derating amount $P_2$ based on the updated parameter R' and the predetermined relationship.

The predetermined relationship may be the same as that described above. The updated derating amount $P_2$ may be determined in the same manner as the derating amount $P_1$ but using the updated parameter R' rather than the parameter R as the input. For example, the predetermined relationship may in the following form:

$$P_2 = aR' + b$$

The values of a and b may be the same in each of the each of the abovementioned equations for a particular induction motor 18. The method 300 then proceeds to step 326.

In step 326 of the method 300, the controller 12 determines whether the updated derating amount $P_2$ calculated in step 324 is greater than the derating amount $P_1$ calculated in step 110. If it is determined in step 326 that the updated derating amount $P_2$ is greater than the derating amount $P_1$, the method 300 proceeds to step 328. If it is determined in step 326 that the updated derating amount $P_2$ is not greater than the derating amount $P_1$, the method 300 returns to step 112.

In step 328 of the method 300, the controller 12 overwrites the derating amount $P_1$ calculated in step 110 with the updated derating amount $P_2$ calculated in step 324. The controller 12 then derates the one or more loads 20, 21 by the updated derating amount $P_2$ in step 112. In contrast, if it is determined in step 326 that the updated derating amount $P_2$ is not greater than the derating amount $P_1$, the derating amount $P_1$ is not overwritten, the controller 12 discards the updated derating amount $P_2$ and derates the one or more loads 20, 21 by the original derating amount $P_1$ in step 112.

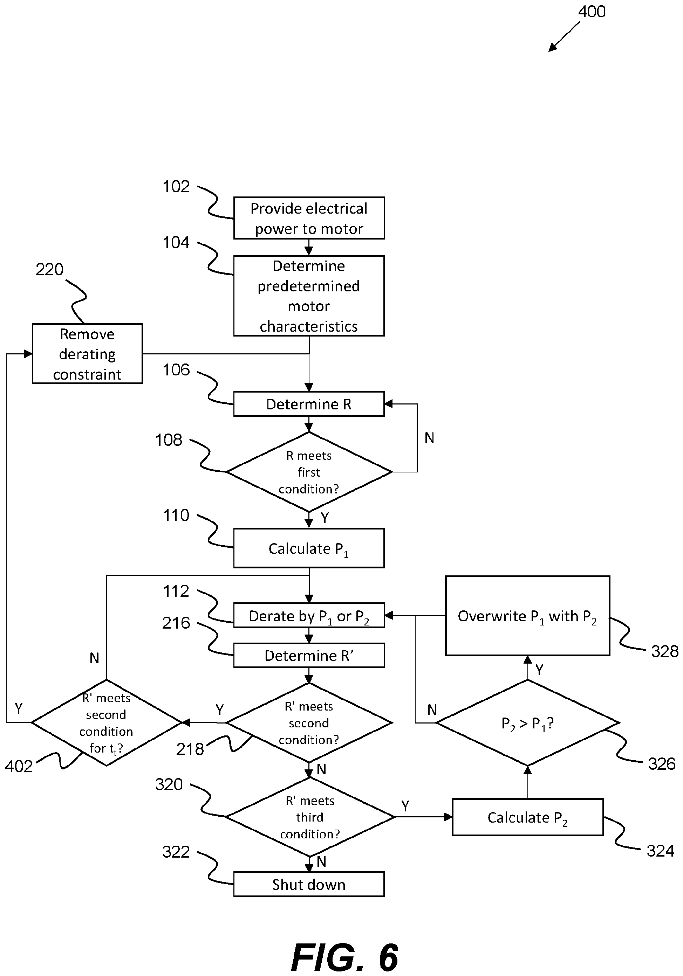

**Figure 6** shows a flowchart of a fourth method 400 of operating the refrigeration system 10. The fourth method 400 generally corresponds to the third method 300 described above, with like reference numerals indicating common or similar features. In the fourth method 400, if it is determined in step 218 that the second condition has been met, the method proceeds to step 402.

In step 402 of the method 400, the controller 12 determines whether the updated parameter R' has continuously met the second condition for a predetermined threshold period of preceding time $t_t$. The predetermined threshold period of preceding time $t_t$ may be 15 minutes, for example. It will however be appreciated that any other suitable time may be chosen. If it is determined in step 402 that the updated parameter R' has continuously met the second condition for a predetermined threshold period of preceding time $t_t$, the method 400 proceeds to step 220. If it is determined in step 402 that the updated parameter R' has not continuously met the second condition for a predetermined threshold period of preceding time $t_t$, the controller 12 proceeds to step 112 where the induction motor 18 continues to derate the one or more loads 20, 21 by the derating amount $P_1$ or the updated derating amount $P_2$.

In step 220 of the method 400, the derating constraint is removed such that the derating of the one or more loads 20, 21 by the derating amount $P_1$ or the updated derating amount $P_2$ is stopped.

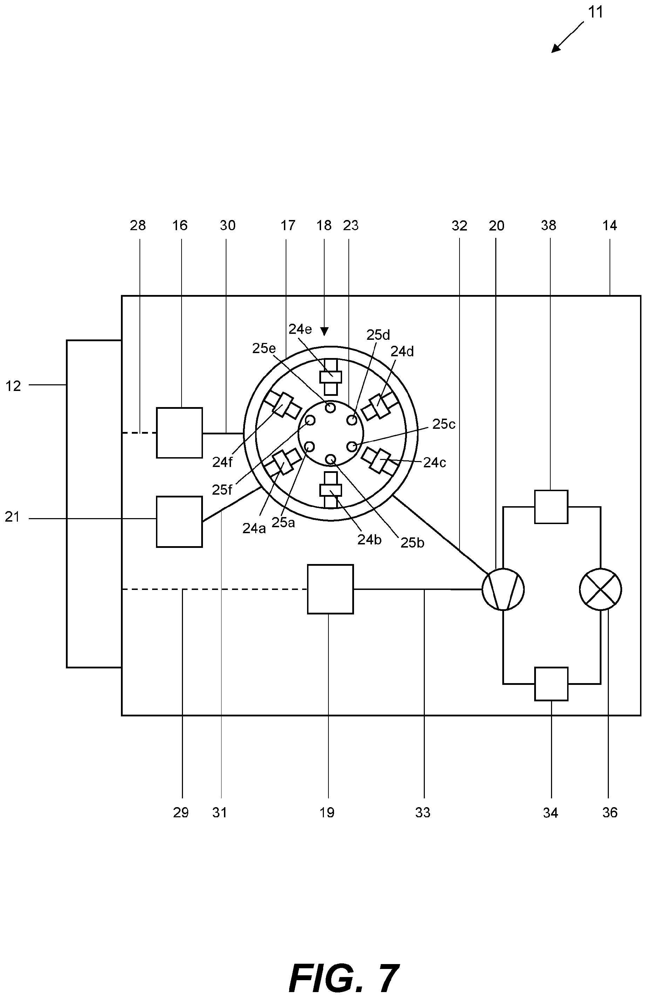

**Figure** 7 schematically shows a second example refrigeration system 11. The second example refrigeration system 11 generally corresponds to the first example refrigeration system 10 described with reference to Figure 3, with like reference numerals indicating common or similar features. However, the second example refrigeration system 11 additionally comprises a diesel motor 19, a second wired or wireless connection 29 and a third mechanical coupling 33. Although the diesel motor 19 is shown as being disposed within the housing 14 of the refrigeration system 10, it may alternatively be located outside of the housing 14. For example, the diesel motor 19 may be the motor used to power the tractor unit 13. The controller 12 is communicatively connected to the diesel motor 19 via the second wired or wireless connection 29. The diesel motor 19 is mechanically coupled to the compressor 20 via the third mechanical coupling 33.

The second example refrigeration system 11 can be operated either in an electric mode in which the compressor 20 is powered by the induction motor 18 via the first mechanical coupling 32 or in a diesel mode in which the compressor 20 is powered by the diesel motor 19. When operating in the electric mode, the second example refrigeration system 11 can be operated in accordance with any of the abovementioned methods 100, 200, 300, 400. When operating in the diesel mode, the controller 12 provides a control signal to the diesel motor 19 via the second wired or wireless connection 28, and the diesel motor 19 is controlled to provide power to the compressor 20 via the third mechanical coupling 33.

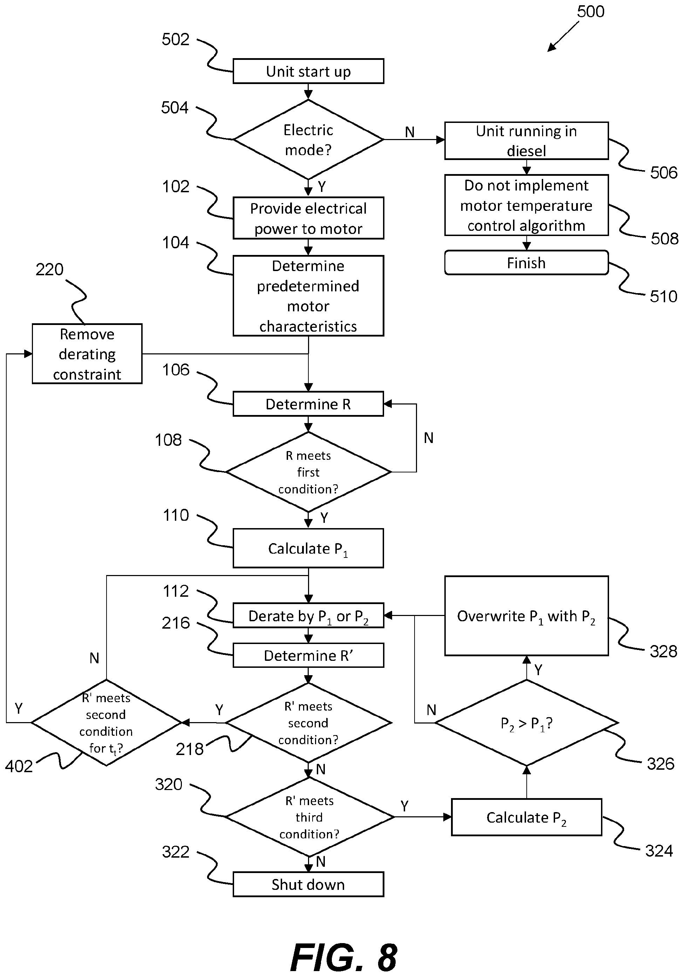

**Figure 8** shows a flowchart of a method 500 of operating the second example refrigeration system 11. The method 500 generally corresponds to the fourth method 400 described above, with like reference numerals indicating common or similar features.

In step 502 of the method 500, the controller 12 starts up the second example refrigeration system 11. The method 500 then proceeds to step 504. In step 504 of the method 500, the controller 12 determines whether the refrigeration system 10 is operating in the electric mode. If the controller 12 determines in step 504 that the refrigeration system 10 is operating in the electric mode, the method 500 proceeds to step 102. If the controller 12 determines in step 504 that the refrigeration system 10 is not operating in electric mode, the method 500 proceeds to step 506. In step 506 of the method 500, the refrigeration system 10 is classified as operating in the diesel mode. The method 500 then proceeds to step 508. In step 508 of the method 500, the controller 12 does not implement the any of the methods 100, 200, 300, 400 described above. The process then finishes at step 510.

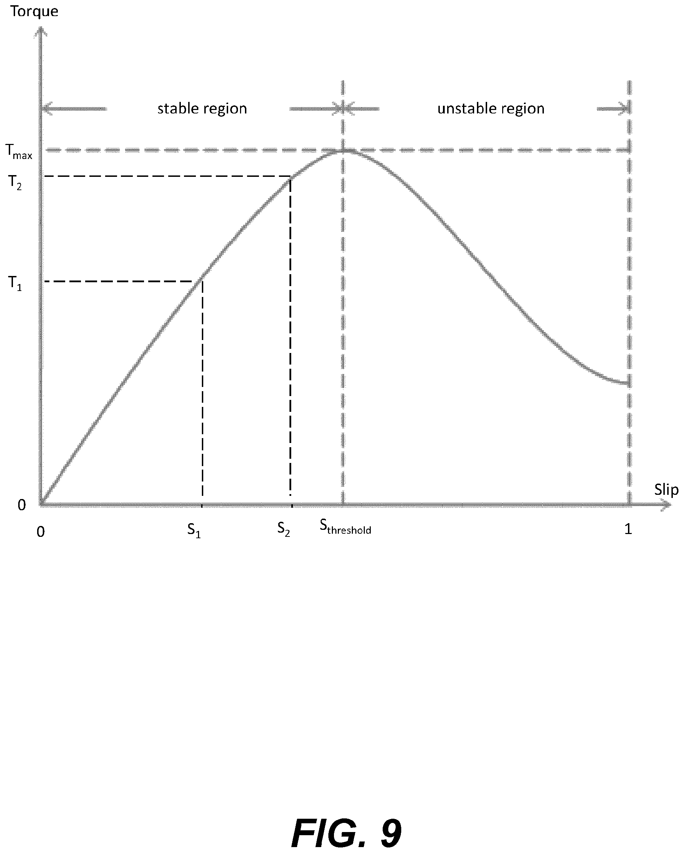

**Figure 9** is a graph showing the relationship between slip and torque in an induction motor such as the induction motor 18 described herein. As shown, in a stable region of operation of the induction motor 18, as slip increases from zero to a threshold slip level $S_{threshold}$, the torque exerted by the induction motor 18 increases in a substantially proportional manner from zero to a maximum torque $T_{max}$. In contrast, in an unstable region of operation of the induction motor 18, as the slip continues to increase from the threshold slip level $S_{threshold}$ towards a value of one, the torque decreases. The amount of slip that occurs at the predetermined threshold value $R_{t1}$ and the amount of slip that occurs at the further predetermined threshold value $R_{t2}$ are denoted by $S_1$ and $S_2$ in Figure 9, respectively, and the corresponding values of torque are denoted as $T_1$ and $T_2$, respectively. It can be deduced from Figure 9 that when the parameter R is between the predetermined threshold value $R_{t1}$ and the further predetermined threshold value $R_{t2}$, the induction motor 18 is operating in the stable region of operation. Accordingly, the torque exerted by the induction motor 18 is substantially proportional to the speed parameter R when the induction motor 18 is operating between the predetermined threshold value $R_{t1}$ and the further predetermined threshold value $R_{t2}$.

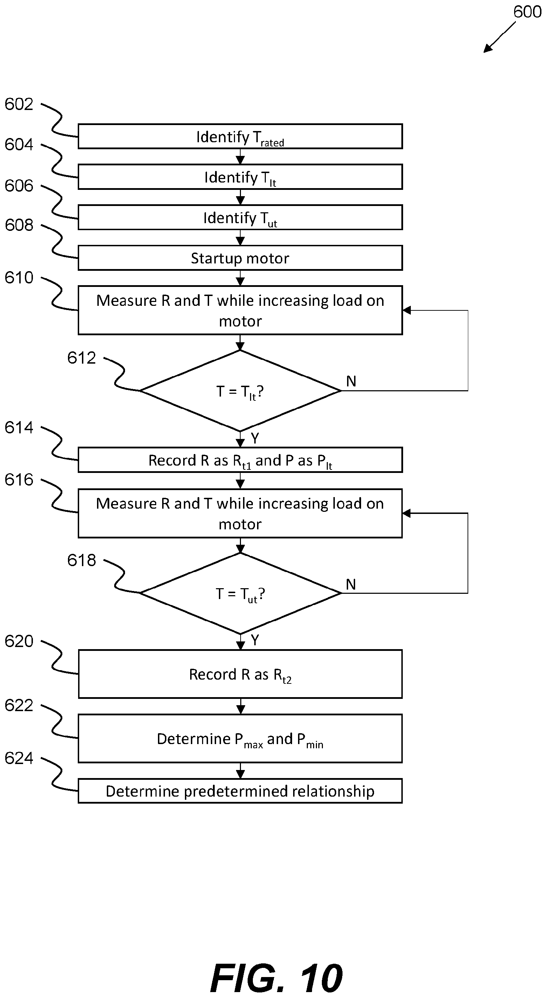

**Figure 10** shows a flow chart of a method 600 of determining the predetermined motor characteristics. The method 600 may be repeated for a range of different induction motors 18 in test conditions in advance of carrying out the methods 100, 200, 300, 400, 500 described above. The tested induction motors 18 may each have different operational characteristics, and, thus, the method 600 may be used to characterise their performance. The tested induction motors 18 may differ from the induction motors 18 incorporated into the refrigeration system 10 insofar as at least one of their stator windings 24a, 24b, 24c, 24d, 24e, 24f is provided with a temperature sensor to sense the temperature of the stator windings 24a, 24b, 24c, 24d, 24e, 24f.

In step 602 of the method 600, a maximum rated temperature value $T_{rated}$ for the stator windings 24a-24f is identified. The maximum rated temperature value $T_{rated}$ may be the temperature above which the stator windings 24a-24f are damaged. The maximum rated temperature value $T_{rated}$ for the stator windings 24a-24f may be determined via testing or obtained from the specification of the stator windings 24a-24f, for example. The method 600 then proceeds to step 604.

In step 604, a lower threshold temperature value $T_{lt}$ of the stator windings 24a-24f is determined based on the maximum rated temperature value $T_{rated}$. The lower threshold temperature value $T_{lt}$ of the stator windings 24a-24f may be defined as a temperature that is a first predetermined amount lower than the maximum rated temperature value $T_{rated}$. For example, the lower threshold temperature value Tit may be defined as being 10°C lower than the maximum rated temperature value $T_{rated}$ of the stator windings 24a-24f. It will however be appreciated that the first predetermined amount may be greater or less than 10°C. The method 600 then proceeds to step 606.

In step 606, an upper threshold temperature value $T_{ut}$ of the stator windings 24a-24f is determined based on the maximum rated temperature value $T_{rated}$. The upper threshold temperature value $T_{ut}$ of the stator windings 24a-24f may be defined as a temperature that is a second predetermined amount lower than the maximum rated temperature value $T_{rated}$, with the second predetermined amount being less than the first predetermined amount used to determine the lower threshold temperature value $T_{lt}$. For example, the upper threshold temperature value $T_{ut}$ may be defined as being 5°C lower than the maximum rated temperature value $T_{rated}$ of the stator windings 24a-24f. It will however be appreciated that the second predetermined amount may be greater or less than 5°C. The method 600 then proceeds to step 608.

In step 608, the induction motor 18 is started up. Initially, a relatively small load is placed on the induction motor 18. The method 600 then proceeds to step 610.

In step 610, the load on the induction motor 18 is increased. Simultaneously, the temperature T of the stator windings 24a-24f and the R of the rotor 23 are measured. The method 600 then proceeds to step 612.

In step 612, controller 12 compares the temperature T of the stator windings 24a-24f to the lower threshold temperature value $T_{lt}$. If it is determined in step 612 that the temperature T of the stator windings 24a-24f is equal to or within a predetermined range (e.g. 1°C) of the lower threshold temperature value $T_{lt}$, the method 600 proceeds to step 612. If it is determined in step 612 that the temperature T of the stator windings 24a-24f is not equal to or within the predetermined range of the lower threshold temperature value $T_{lt}$, the method 600 returns to step 610.

In step 614, the current value of the speed of the induction motor 18 (i.e. the speed of the induction motor 18 at which the temperature T of the stator windings 24a-24f is equal to or within a predetermined range of the lower threshold temperature value $T_{lt}$) is recorded as being the predetermined threshold value $R_{t1}$. The method 600 then proceeds to step 616. The current load P on the induction motor 18 is recorded as the lower threshold temperature load $P_{lt}$.

In step 616, the load on the induction motor 18 is further increased while the temperature T of the stator windings 24a-24f and the speed of the induction motor 18 continues to be measured. The method 600 then proceeds to step 618.

In step 618, controller 12 compares the temperature T of the stator windings 24a-24f to the upper threshold temperature value $T_{ut}$. If it is determined in step 618 that the temperature T of the stator windings 24a-24f is equal to or within the predetermined range of the upper threshold temperature value $T_{ut}$, the method 600 proceeds to step 620. If it is determined in step 618 that the temperature T of the stator windings 24a-24f is not equal to or within a predetermined range of the upper threshold temperature value $T_{ut}$, the method 600 returns to step 616.

In step 620, the current value of the speed of the induction motor 18 (i.e. the speed of the induction motor 18 at which the temperature T of the stator windings 24a-24f is equal to or within a predetermined range of the upper threshold temperature value $T_{ut}$) is recorded as being the further predetermined threshold value $R_{t2}$. The method 600 then proceeds to step 622.

In step 622, the maximum derating amount $P_{max}$ and minimum derating amount $P_{min}$ are determined. The minimum derating amount $P_{min}$ may be set to zero.

The maximum derating amount $P_{max}$ may be the maximum amount the load or loads on the induction motor 18 (e.g. the compressor 20 and/or electrical generator 21) need to be reduced by (i.e. derated by) for the temperature T of the stator windings 24a-24f to be reduced to below the lower threshold temperature value Tit. The maximum derating amount $P_{max}$ may be determined by the following equation, in which $P_{rated}$ represents the rated load of the induction motor 18 and the lower threshold temperature load $P_{lt}$ represents the load on the induction motor 18 that results in the temperature T of the stator windings 24a-f being equal to the lower threshold temperature value $T_{lt}$:

$$P_{max} = P_{rated} - P_{lt}$$

The rated load $P_{rated}$ of the induction motor 18 may be the load on the induction motor 18 above which the stator windings 24a-24f are damaged. The rated load $P_{rated}$ of the induction motor 18 may be determined via testing or obtained from the specification of the induction motor 18 or stator windings 24a-24f, for example.

Alternatively, the maximum derating amount

$P_{max}$ may be based on the maximum amount the load or loads on the induction motor 18 (e.g. the compressor 20 and/or electrical generator 21) need to be reduced by (i.e. derated by) for the temperature T of the stator windings 24a-24f to be reduced to below the lower threshold temperature value Tit. For example, the maximum derating amount $P_{max}$ may be determined by the following equation, in which n represents a safety factor:

$$P_{max} = n(P_{rated} - P_{lt})$$

The safety factor n may be set to a value greater than 1 such that that the maximum derating amount $P_{max}$ is greater than what it would otherwise be if the safety factor were not applied. For example, to apply a safety factor of 10%, the value of n could be set to 1.1. It will however be appreciated that safety factor may be greater than or less than 10%. In practice, due to manufacturing tolerances of the induction motor 18 (e.g. manufacturing tolerances of the windings 24a-24f, 25a-25f of the induction motor 18) and variation in the amount of alternating current that the induction motor 18 is provided with during operation, the temperature of the stator windings 24a-24f under set conditions may differ from their nominal expected value, and, thus, in some circumstances be higher than their nominal expected value. Accordingly, using a safety factor in the above manner ensures that loads 20, 21 are sufficiently derated and the actual temperature of the stator windings 24a-24f do not exceed desired values. The method 600 then proceeds to step 624.

In step 624, the specific derating amount equation is determined for the induction motor 18 being tested. The specific derating amount equation defines the predetermined relationship, and, thus, the amount the load of the induction motor 18 being tested should be reduced by based on the parameter R if the temperature T of the stator windings 24a-24f meets certain criteria. The specific derating amount equation is based on the following general derating amount equation:

$$P_1 = \frac{P_{min} - P_{max}}{R_{t1} - R_{t2}}(R - R_{t2}) + P_{max}$$

The general derating amount equation is based on linear interpolation between two known points, and sets out that the maximum derating amount $P_{max}$ is applied when the parameter R is equal to the further predetermined threshold value $R_{t2}$ and the minimum derating amount $P_{min}$ is applied when the parameter $R$ is equal to the predetermined threshold value $R_{t1}$. The general derating amount equation also sets out that the derating amount $P_1$ applied decreases and increases proportionally between the maximum derating amount $P_{max}$ and the minimum derating amount $P_{min}$ in response to a change in the parameter $R$.

To determine the specific derating amount equation of the induction motor 18 being tested, the specific values of derating amount determined for the induction motor 18 being tested are inserted into the general derating amount equation. By way of example, if it is determined that the minimum derating amount $P_{min}$ is 0, the maximum derating amount $P_{max}$ is 1000 Watts, the predetermined threshold value $R_{t1}$ is 1433 RPM and the further predetermined threshold value $R_{t2}$ is 1418 RPM, the specific derating amount equation may be determined to be the following:

$$P_1 = -66.67R + 95533.33$$

By way of example, for such an induction motor 18, the predetermined maximum rated temperature value $T_{rated}$ of the stator windings 24a-24f may have been 155°C, the lower threshold temperature value $T_{lt}$ of the stator windings 24a-24f may have been 145°C and the upper threshold temperature value $T_{ut}$ of the stator windings 24a-24f may have been 150°C.

The specific derating amount equation for the induction motor 18 being tested may be recorded in memory as described above (e.g. in a lookup table) along with any of the predetermined values described herein. The specific derating amount equation used to determine the updated derating amount $P_2$ is the same as the specific derating amount equation used to determine the derating amount $P_1$.

If the predetermined relationship is instead in the form of a map, derating amounts $P_1$ or $P_2$ may be precalculated using the above equation and associated with potential determined parameters R for later retrieval from the memory.

As also mentioned above, the abovementioned method 600 may be repeated for a range of different induction motors 18. It will be appreciated that each induction motor 18 may have different characteristics. For example, the maximum rated temperature values $T_{rated}$ for the stator windings 24a-24f of different induction motors 18 may be different and the stator windings 24a-24f different induction motors 18 may respond differently to increases in load on the induction motor 18. However, to provide a direct comparison, the first and second predetermined amounts are the same irrespective of the induction motor 18 being tested.

The characteristics exhibited by the induction motors 18 may differ depending on what phase of electrical power the induction motors 18 are being supplied with. For example, in the example above, the predetermined relationship associated with the induction motor 18 between the parameter R and the derating amount $P_1$ may be the following when the induction motor 18 is being supplied with 50 Hertz power:

$$P_1 = -66.67R + 95533.33$$

However, the predetermined relationship associated with the induction motor 18 between the parameter R and the derating amount $P_1$ may instead be the following when the induction motor 18 is being supplied with 60 Hertz power:

$$P_1 = -55.56R + 95533.33$$

Accordingly, the methods 100, 200, 300, 400, 500 described herein may further comprise: identifying what phase of power the induction motor 18 is being supplied with; and identifying the predetermined relationship associated with the induction motor 18 between the parameter R and a derating amount $P_1$ for the identified phase of power. It will be appreciated that the method 600 may correspondingly involve predetermining the characteristics of the induction motors 18 at multiple phases of power supply.

Although it has been described that the parameter R is an angular velocity of the induction motor 18, in alternative embodiments, the R and may instead be a slip of the induction motor 18. In such embodiments: the first condition of step 108 is met when the slip is greater than the predetermined threshold value $R_{t1}$, which is a threshold value of slip; the determined updated parameter R' of step 216 is an updated slip of the rotor 23 of the induction motor 18; the second condition of step 218 is met when the slip is less than the predetermined threshold value $R_{t1}$; the third condition of step 302 is met when the updated slip is less than the predetermined further threshold value $R_{t2}$, which is a further threshold value of slip; the predetermined threshold value $R_{t1}$ is predetermined as being the slip of the rotor 23 that results in the temperature $T_{lt}$ of the stator windings 24a-24f being the predetermined first amount lower than the predetermined rated temperature $T_{rated}$ of the stator windings 24a-24f; the predetermined further threshold value $R_{t2}$ is predetermined as being the slip of the rotor 23 that results in a temperature $T_{ut}$ of the stator windings 24a-24f being the predetermined second amount lower than the predetermined rated temperature $T_{rated}$ of the stator windings 24a-24f; and the determined parameter and/or the determined updated parameter is an average slip of the rotor 23 over a predetermined period of time. In such embodiments, the predetermined further threshold value $R_{t2}$ of slip (e.g. expressed as a percentage) is a value of slip that is greater than the predetermined threshold value $R_{t1}$ of slip.

It will be appreciated that features of each of the abovementioned methods 100, 200, 300, 400, 500 may be incorporated in other aspects of the abovementioned methods 100, 200, 300, 400, 500. For example, the additional features of the fifth method 500 may be incorporated into the first to third methods 100, 200, 300. By way of example, the additional features of the fourth method 400 may be incorporated into the second method 200. It will also be appreciated that the order of the steps of the methods 100, 200, 300, 400, 500, 600 are only exemplary, and alternative ordering may be used where appropriate.

Although the methods 100, 200, 300, 400, 500, 600 have been described in relation to the stator windings 24a-24f, the methods 100, 200, 300, 400, 500, 600 may instead be carried out in relation to the rotor windings 25a-25f

It will be appreciated that instead of determining that a condition has been met if a first value is determined to be greater than a second value, it may alternatively be met if the second value is not determined to be less than the first value. Likewise, it will be appreciated that instead of determining that a condition has been met if a first value is determined to be less than a second value, it may alternatively be met if the second value is not determined to be greater than the first value.

## Claims

1. A refrigeration system (10), the refrigeration system (10) comprising an induction motor (18) having a rotor (23), wherein the refrigeration system (10) is configured to:

   supply (102) an alternating current to the induction motor (18) to induce rotation of the rotor (23), wherein rotation of the rotor (23) powers one or more loads (20, 21) of the refrigeration system (10);
   identify (104) a predetermined threshold value ($R_{t1}$) of a parameter (R) of the induction motor (18) and a predetermined relationship associated with the induction motor (18) between the parameter (R) and a derating amount ($P_1$), the parameter (R) being an angular velocity or a slip of the rotor (23) of the induction motor (18);
   determine (106) the parameter (R) of the rotor (23) during rotation of the rotor (23);
   determine (108) whether the determined parameter (R) meets a first condition, the first condition being the angular velocity (R) being less than the predetermined threshold value ($R_{t1}$) or the slip being greater than the predetermined threshold value ($R_{t1}$);
   upon determining that the first condition has been met, determine (110) a derating amount ($P_1$) based on the determined parameter (R) and the predetermined relationship; and
   derate (112) the one or more loads (20, 21) by the derating amount ($P_1$).

2. A refrigeration system (10) as claimed in claim 1, wherein the refrigeration system (10) is configured to:

   determine (216) an updated parameter (R') of the rotor (23) during rotation of the rotor (23) following derating (112) the induction motor (18) by the derating amount ($P_1$), the determined updated parameter (R') being an updated angular velocity or an updated slip of the rotor (23) of the induction motor (18);

determine (218) whether the determined updated parameter (R') meets a second condition, the second condition being the updated angular velocity (R) being greater than the predetermined threshold value ($R_{t1}$) or the slip being less than the predetermined threshold value ($R_{t1}$); and

stop derating (220) the induction motor (18) by the derating amount ($P_1$) upon determining that the second condition has been met.

3. A refrigeration system (10) as claimed in claim 2, wherein the refrigeration system (10) is configured to:

determine (218) whether the determined updated parameter (R') meets the second condition for a predetermined threshold period of preceding time ($t_t$);

stop derating (220) the induction motor (18) by the derating amount ($P_1$) upon determining that the second condition has continuously been met for the predetermined threshold period of preceding time ($t_t$); and

continue derating (112) the induction motor (18) by the derating amount ($P_1$) upon determining that the second condition has not been met for the predetermined threshold period of preceding time ($t_t$).

4. A refrigeration system (10) as claimed in claim 2 or 3, wherein the refrigeration system (10) is configured to:

identify (104) a predetermined further threshold value ($R_{t2}$), the predetermined further threshold value ($R_{t2}$) being a predetermined threshold value of the determined updated parameter (R'), wherein the predetermined further threshold value ($R_{t2}$) is less than the predetermined threshold value ($R_{t1}$) if the parameter (R) is the angular velocity of the rotor (23), and wherein the predetermined further threshold value ($R_{t2}$) is greater than the predetermined threshold value ($R_{t1}$) if the parameter (R) is the slip of the rotor (23); and

determine (320) whether the determined updated parameter (R') meets a third condition, the third condition being the updated angular velocity (R') being greater than the predetermined further threshold value ($R_{t2}$) or the updated slip being less than the predetermined further threshold value ($R_{t2}$).

5. A refrigeration system (10) as claimed in claim 4, wherein the refrigeration system (10) is configured to:

determine (324) an updated derating amount ($P_2$) based on the determined updated parameter (R') and the predetermined relationship upon determining that the third condition has been met;

determine (326) whether the updated derating amount ($P_2$) is greater than the derating amount ($P_1$); and

derate (328) the induction motor (18) by the updated derating amount ($P_2$) upon determining (326) that the updated derating amount ($P_2$) is greater than the derating amount ($P_1$).

6. A refrigeration system (10) as claimed in claim 4 or 5, wherein the refrigeration system (10) is configured to:
shut down (322) the induction motor (18) upon determining that the third condition has not been met.

7. A refrigeration system (10) as claimed in any preceding claim, wherein the alternating current that the refrigeration system (10) is configured to supply to the induction motor (18) has a phase, wherein the predetermined threshold value ($R_{t1}$) is predetermined as being the angular velocity or slip of the rotor (23) of the induction motor (18) that results in a temperature ($T_{lt}$) of the winding (24a-24f, 25a-25f) of the induction motor (18) being a predetermined first amount lower than a predetermined rated temperature ($T_{rated}$) of the winding (24a-24f, 25a-25f) of the induction motor (18) when the induction motor (18) is supplied with the phase of alternating current.

8. A refrigeration system (10) as claimed in claim 7 when appended to any of claims 4 to 6, wherein the predetermined further threshold value ($R_{t2}$) is predetermined as being the angular velocity or slip of the rotor (23) of the induction motor (18) that results in a temperature ($T_{ut}$) of the winding (24a-24f, 25a-25f) of the induction motor (18) being a predetermined second amount lower than the predetermined rated temperature ($T_{rated}$) of the winding (24a-24f, 25a-25f) of the induction motor when the induction motor (18) is supplied with the phase of alternating current, the second amount being less than the first amount.

9. A refrigeration system (10) as claimed in claim 7 or 8, wherein the derating amount ($P_1$) and/or the updated derating amount ($P_2$) tend to a predetermined maximum derating amount ($P_{max}$) as the determined parameter (R) and/or the determined updated parameter (R') tend to the predetermined further threshold value ($R_{t2}$), wherein the predetermined maximum derating amount ($P_{max}$) is or is based on the maximum amount the load on the induction motor (18) needs to be reduced by for the temperature of the winding (24a-24f, 25a-25f) to be less than the temperature ($T_{lt}$) of the winding (24a-24f, 25a-25f) that is the first amount lower than the predetermined rated temperature ($T_{rated}$) of the winding (24a-24f, 25a-25f).

10. A refrigeration system (10) as claimed in any preceding claim, wherein the derating amount ($P_1$) and/or the updated derating amount ($P_2$) tend to zero as the determined parameter (R) and/or the determined updated parameter (R') tend to the predetermined threshold value ($R_{t1}$).

11. A refrigeration system (10) as claimed in any preceding claim, wherein the derating amount ($P_1$) is directly proportional to the difference between the determined parameter (R) and the predetermined threshold value ($R_{t1}$) and/or wherein the updated derating amount ($P_2$) is directly proportional to the difference between the determined updated parameter (R') and the predetermined threshold value ($R_{t1}$).

12. A refrigeration system (10) as claimed in any preceding claim, wherein the induction motor (18) is selected from a plurality of induction motors (18), wherein one or more of the predetermined threshold value ($R_{t1}$), the predetermined further threshold value ($R_{t2}$), the predetermined relationship associated with the induction motor (18) between the derating amount ($P_1$) and the determined parameter (R), the predetermined threshold period of preceding time ($t_t$), the predetermined first amount, the predetermined rated temperature ($T_{rated}$), the predetermined second amount and the predetermined maximum derating amount of each of the plurality of induction motors (18) are stored in a memory that is accessible by the refrigeration system (10), wherein optionally the memory is in the form of a lookup table.

13. A refrigeration system (10) as claimed in any preceding claim, wherein the determined parameter (R) and/or the determined updated parameter (R') is an average angular velocity or an average slip of the rotor (23) over a predetermined period of time.

14. A refrigeration system (10) as claimed in any preceding claim, wherein the refrigeration system (10) is configured to:

    start up (502) the refrigeration system (10);
    determine (502) whether the refrigeration system (10) is operating in an electric mode of operation;
    carry out the steps of any preceding claim upon determining that the transportation refrigeration system (10) is operating in the electric mode of operation; and
not carry out the steps of any preceding claim upon determining that the transportation refrigeration system (10) is not operating in the electric mode of operation.

15. A method (100, 200, 300, 400, 500) of operating a refrigeration system (10) as claimed in any preceding claim, the method (100, 200, 300, 400, 500) comprising:

    supplying (102) an alternating current to the induction motor (18) to induce rotation of the rotor (23), wherein rotation of the rotor (23) powers the one or more loads (20, 21) of the refrigeration system (10);
    identifying (104) a predetermined threshold value ($R_{t1}$) of a parameter (R) of the induction motor (18) and a predetermined relationship associated with the induction motor (18) between the parameter (R) and a derating amount ($P_1$), the parameter (R) being an angular velocity or a slip of the rotor (23) of the induction motor (18);
    determining (106) the parameter of the rotor (23) during rotation of the rotor (23);
    determining (108) whether the determined parameter (R) meets a first condition, the first condition being the angular velocity (R) being less than the predetermined threshold value ($R_{t1}$) or the slip being greater than the predetermined threshold value ($R_{t1}$);
    upon determining that the first condition has been met, determining (110) a derating amount ($P_1$) based on the determined parameter (R) and the predetermined relationship; and
    derating (112) the one or more loads (20, 21) by the derating amount ($P_1$).

**Amended claims in accordance with Rule 137(2) EPC.**

1. A refrigeration system (10), the refrigeration system (10) comprising:

    an induction motor (18) having a rotor (23);
    an electrical power source (16) connected to the induction motor (18) for supplying (102) an alternating current to the induction motor (18) to induce rotation of the rotor (23), wherein rotation of the rotor (23) powers one or more loads (20, 21) of the refrigeration system (10); and
    a controller (12) configured to:

        identify (104) a predetermined threshold value ($R_{t1}$) of a parameter (R) of the induction motor (18) and a predetermined relationship associated with the induction motor

(18) between the parameter (R) and a derating amount ($P_1$), the parameter (R) being an angular velocity or a slip of the rotor (23) of the induction motor (18);

determine (106) the parameter (R) of the rotor (23) during rotation of the rotor (23);

determine (108) whether the determined parameter (R) meets a first condition, the first condition being the angular velocity (R) being less than the predetermined threshold value ($R_{t1}$) or the slip being greater than the predetermined threshold value ($R_{t1}$);

upon determining that the first condition has been met, determine (110) a derating amount ($P_1$) based on the determined parameter (R) and the predetermined relationship; and

derate (112) the one or more loads (20, 21) by the derating amount ($P_1$).

2. A refrigeration system (10) as claimed in claim 1, wherein the controller (12) is configured to:

determine (216) an updated parameter (R') of the rotor (23) during rotation of the rotor (23) following derating (112) the induction motor (18) by the derating amount ($P_1$), the determined updated parameter (R') being an updated angular velocity or an updated slip of the rotor (23) of the induction motor (18);

determine (218) whether the determined updated parameter (R') meets a second condition, the second condition being the updated angular velocity (R) being greater than the predetermined threshold value ($R_{t1}$) or the slip being less than the predetermined threshold value ($R_{t1}$); and

stop derating (220) the induction motor (18) by the derating amount ($P_1$) upon determining that the second condition has been met.

3. A refrigeration system (10) as claimed in claim 2, wherein the controller (12) is configured to:

determine (218) whether the determined updated parameter (R') meets the second condition for a predetermined threshold period of preceding time (tt);

stop derating (220) the induction motor (18) by the derating amount ($P_1$) upon determining that the second condition has continuously been met for the predetermined threshold period of preceding time (tt); and

continue derating (112) the induction motor (18) by the derating amount ($P_1$) upon determining that the second condition has not been met for the predetermined threshold period of preceding time (tt).

4. A refrigeration system (10) as claimed in claim 2 or 3, wherein the controller (12) is configured to:

identify (104) a predetermined further threshold value ($R_{t2}$), the predetermined further threshold value ($R_{t2}$) being a predetermined threshold value of the determined updated parameter (R'), wherein the predetermined further threshold value ($R_{t2}$) is less than the predetermined threshold value ($R_{t1}$) if the parameter (R) is the angular velocity of the rotor (23), and wherein the predetermined further threshold value ($R_{t2}$) is greater than the predetermined threshold value ($R_{t1}$) if the parameter (R) is the slip of the rotor (23); and

determine (320) whether the determined updated parameter (R') meets a third condition, the third condition being the updated angular velocity (R') being greater than the predetermined further threshold value ($R_{t2}$) or the updated slip being less than the predetermined further threshold value ($R_{t2}$).

5. A refrigeration system (10) as claimed in claim 4, wherein the controller (12) is configured to:

determine (324) an updated derating amount ($P_2$) based on the determined updated parameter (R') and the predetermined relationship upon determining that the third condition has been met;

determine (326) whether the updated derating amount ($P_2$) is greater than the derating amount ($P_1$); and

derate (328) the induction motor (18) by the updated derating amount ($P_2$) upon determining (326) that the updated derating amount ($P_2$) is greater than the derating amount ($P_1$).

6. A refrigeration system (10) as claimed in claim 4 or 5, wherein the controller (12) is configured to:

shut down (322) the induction motor (18) upon determining that the third condition has not been met.

7. A refrigeration system (10) as claimed in any preceding claim, wherein the alternating current that the refrigeration system (10) is configured to supply to the induction motor (18) has a phase, wherein the predetermined threshold value ($R_{t1}$) is predetermined as being the angular velocity or slip of the rotor (23) of the induction motor (18) that results in a temperature ($T_{lt}$) of the winding (24a-24f, 25a-25f) of the induction motor (18) being a predetermined first amount lower than a predetermined rated temperature ($T_{rated}$) of the winding (24a-24f, 25a-25f) of the induction motor (18) when the induction motor (18) is supplied with the phase of alternating current.

8. A refrigeration system (10) as claimed in claim 7 when appended to any of claims 4 to 6, wherein the predetermined further threshold value ($R_{t2}$) is predetermined as being the angular velocity or slip of the rotor (23) of the induction motor (18) that results in a temperature ($T_{ut}$) of the winding (24a-24f, 25a-25f) of the induction motor (18) being a predetermined second amount lower than the predetermined rated temperature ($T_{rated}$) of the winding (24a-24f, 25a-25f) of the induction motor when the induction motor (18) is supplied with the phase of alternating current, the second amount being less than the first amount.

9. A refrigeration system (10) as claimed in claim 7 or 8, wherein the derating amount ($P_1$) and/or the updated derating amount ($P_2$) tend to a predetermined maximum derating amount ($P_{max}$) as the determined parameter (R) and/or the determined updated parameter (R') tend to the predetermined further threshold value ($R_{t2}$), wherein the predetermined maximum derating amount ($P_{max}$) is or is based on the maximum amount the load on the induction motor (18) needs to be reduced by for the temperature of the winding (24a-24f, 25a-25f) to be less than the temperature ($T_{lt}$) of the winding (24a-24f, 25a-25f) that is the first amount lower than the predetermined rated temperature ($T_{rated}$) of the winding (24a-24f, 25a-25f).

10. A refrigeration system (10) as claimed in any preceding claim, wherein the derating amount ($P_1$) and/or the updated derating amount ($P_2$) tend to zero as the determined parameter (R) and/or the determined updated parameter (R') tend to the predetermined threshold value ($R_{t1}$).

11. A refrigeration system (10) as claimed in any preceding claim, wherein the derating amount ($P_1$) is directly proportional to the difference between the determined parameter (R) and the predetermined threshold value ($R_{t1}$) and/or wherein the updated derating amount ($P_2$) is directly proportional to the difference between the determined updated parameter (R') and the predetermined threshold value ($R_{t1}$).

12. A refrigeration system (10) as claimed in any preceding claim, wherein the induction motor (18) is selected from a plurality of induction motors (18), wherein one or more of the predetermined threshold value ($R_{t1}$), the predetermined further threshold value ($R_{t2}$), the predetermined relationship associated with the induction motor (18) between the derating amount ($P_1$) and the determined parameter (R), the predetermined threshold period of preceding time (tt), the predetermined first amount, the predetermined rated temperature ($T_{rated}$), the predetermined second amount and the predetermined maximum derating amount of each of the plurality of induction motors (18) are stored in a memory that is accessible by the refrigeration system (10), wherein optionally the memory is in the form of a lookup table.

13. A refrigeration system (10) as claimed in any preceding claim, wherein the determined parameter (R) and/or the determined updated parameter (R') is an average angular velocity or an average slip of the rotor (23) over a predetermined period of time.

14. A refrigeration system (10) as claimed in any preceding claim, wherein the controller (12) is configured to:

start up (502) the refrigeration system (10);
determine (504) whether the refrigeration system (10) is operating in an electric mode of operation;
carry out the steps of any preceding claim upon determining that the transportation refrigeration system (10) is operating in the electric mode of operation; and
not carry out the steps of any preceding claim upon determining that the transportation refrigeration system (10) is not operating in the electric mode of operation.

15. A method (100, 200, 300, 400, 500) of operating a refrigeration system (10) as claimed in any preceding claim, the method (100, 200, 300, 400, 500) comprising:

supplying (102) an alternating current to the induction motor (18) to induce rotation of the rotor (23), wherein rotation of the rotor (23) powers the one or more loads (20, 21) of the refrigeration system (10);
identifying (104) a predetermined threshold value ($R_{t1}$) of a parameter (R) of the induction motor (18) and a predetermined relationship associated with the induction motor (18) between the parameter (R) and a derating amount ($P_1$), the parameter (R) being an angular velocity or a slip of the rotor (23) of the induction motor (18);
determining (106) the parameter of the rotor (23) during rotation of the rotor (23);
determining (108) whether the determined parameter (R) meets a first condition, the first condition being the angular velocity (R) being less than the predetermined threshold value ($R_{t1}$) or the slip being greater than the predetermined threshold value ($R_{t1}$);
upon determining that the first condition has been met, determining (110) a derating amount ($P_1$) based on the determined parameter (R) and the predetermined relationship; and
derating (112) the one or more loads (20, 21) by the derating amount ($P_1$).

2

8

4

10

13

6

# FIG. 1

**FIG. 2**

100

**FIG. 3**

200

102 — Provide electrical power to motor

104 — Determine predetermined motor characteristics

220 — Remove derating constraint

106 — Determine R

108 — R meets first condition?    N

Y

110 — Calculate $P_1$

112 —
216 — Derate by $P_1$

Determine R'

Y    R' meets second condition?

218 —    N

*FIG. 4*

300

102 — Provide electrical power to motor

104 — Determine predetermined motor characteristics

220 — Remove derating constraint

106 — Determine R

108 — R meets first condition? — N

Y

110 — Calculate $P_1$

112 — Derate by $P_1$ or $P_2$

216 — Determine R′

328 — Overwrite $P_1$ with $P_2$

Y

218 — R′ meets second condition? — Y

N

326 — $P_2 > P_1$? — N

Y

320 — R′ meets third condition? — Y

324 — Calculate $P_2$

N

322 — Shut down

**FIG. 5**

400

102 — Provide electrical power to motor

104 — Determine predetermined motor characteristics

220 — Remove derating constraint

106 — Determine R

108 — R meets first condition?  → N

Y

110 — Calculate $P_1$

112 — Derate by $P_1$ or $P_2$  ← Overwrite $P_1$ with $P_2$ — 328

216 — Determine R′

N — R′ meets second condition for $t_t$? — 402

Y — R′ meets second condition? — 218

N

320 — R′ meets third condition? — Y → Calculate $P_2$ — 324

N — $P_2 > P_1$? — 326

Y

322 — Shut down

**FIG. 6**

**FIG. 7**

500

502 — Unit start up

504 — Electric mode? —N→ Unit running in diesel — 506

↓ Y

102 — Provide electrical power to motor

Do not implement motor temperature control algorithm — 508

104 — Determine predetermined motor characteristics

Finish — 510

220 — Remove derating constraint

106 — Determine R

108 — R meets first condition? —N

↓ Y

110 — Calculate $P_1$

112 — Derate by $P_1$ or $P_2$ ←— Overwrite $P_1$ with $P_2$ — 328

216 — Determine R′

↑ Y

N

402 — R′ meets second condition for $t_t$? —Y

218 — R′ meets second condition? —Y

$P_2 > P_1$? — 326

N

320 — R′ meets third condition? —Y→ Calculate $P_2$ — 324

↓ N

322 — Shut down

**FIG. 8**

FIG. 9

600

602 — Identify $T_{rated}$

604 — Identify $T_{lt}$

606 — Identify $T_{ut}$

608 — Startup motor

610 — Measure R and T while increasing load on motor

612 — T = $T_{lt}$? —N

614 — Y — Record R as $R_{t1}$ and P as $P_{lt}$

616 — Measure R and T while increasing load on motor

618 — T = $T_{ut}$? —N

620 — Y — Record R as $R_{t2}$

622 — Determine $P_{max}$ and $P_{min}$

624 — Determine predetermined relationship

## FIG. 10

Europäisches
Patentamt

European
Patent Office

Office européen
des brevets

## EUROPEAN SEARCH REPORT

**Application Number**

EP 24 20 9603

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/050141 A1 (YEH CHIA-CHOU [US] ET AL) 3 March 2011 (2011-03-03) | 1-3,7, 10,15 | INV. H02P3/18 |
| A | * paragraph [0010] - paragraph [0042]; claims 1-13; figures 1-6 * <br> * paragraph [0080] - paragraph [0095] * | 4-6,8,9, 11-14 | F25B49/02 H02P29/024 H02P29/032 H02P29/60 |
| Y | US 2023/146546 A1 (MARCINKIEWICZ JOSEPH G [US] ET AL) 11 May 2023 (2023-05-11) | 1-3,7, 10,15 | H02P29/64 |
| A | * paragraph [0001] * <br> * paragraph [0199] * | 4-6,8,9, 11-14 | |
| A | CN 116 278 801 A (CHINA FAW GROUP CORP) 23 June 2023 (2023-06-23) <br> * the whole document * | 1-15 | |
| A | US 2023/087179 A1 (GALLERT BRIAN J [US] ET AL) 23 March 2023 (2023-03-23) <br> * the whole document * | 1-15 | |

**TECHNICAL FIELDS SEARCHED (IPC)**

H02P
F25B

The present search report has been drawn up for all claims

| Place of search | Date of completion of the search | Examiner |
|---|---|---|
| Munich | 27 March 2025 | Roussel, Maxime |

EPO FORM 1503 03.82 (P04C01)

## ANNEX TO THE EUROPEAN SEARCH REPORT
## ON EUROPEAN PATENT APPLICATION NO.

EP 24 20 9603

This annex lists the patent family members relating to the patent documents cited in  the above-mentioned European search report.
The members are as contained in the European Patent Office EDP file on
The European Patent Office is in no way liable for these particulars which are merely given for the purpose of information.

27-03-2025

| Patent document cited in search report | | Publication date | Patent family member(s) | | Publication date |
|---|---|---|---|---|---|
| US 2011050141 | A1 | 03-03-2011 | CN | 102004008 A | 06-04-2011 |
| | | | DE | 102010038560 A1 | 14-04-2011 |
| | | | US | 2011050141 A1 | 03-03-2011 |
| US 2023146546 | A1 | 11-05-2023 | CN | 118318388 A | 09-07-2024 |
| | | | EP | 4426985 A1 | 11-09-2024 |
| | | | US | 2023146546 A1 | 11-05-2023 |
| | | | WO | 2023081146 A1 | 11-05-2023 |
| CN 116278801 | A | 23-06-2023 | NONE | | |
| US 2023087179 | A1 | 23-03-2023 | NONE | | |

EPO FORM P0459

For more details about this annex : see Official Journal of the European Patent Office, No. 12/82